# EUROPEAN PATENT APPLICATION

(11) **EP 1 085 256 A1**
(43) Date of publication of application: **21.03.2001**
(21) Application number: 00307425.9
(22) Date of filing: 30.08.2000
(51) Int. Cl.: F21V 8/00

(54) **Method and apparatus for collecting light**

(30) Priority: 17.09.1999 US 398731
(71) Applicant: Ford Motor Company, Dearborn, MI 48126 (US)
(72) Inventor: Patel, Balvantrai, Rochester Hills, Michigan 48309 (US); Chinniah, Jeyachandrabose(Nmi), Ann Arbor, Michigan 48105 (US); Dassanayake, Mahendra Somasara, West Bloomfield, Michigan 48322 (US); Cruz, Jose M., Livonia, Michigan 48152 (US)
(74) Representative: Messulam, Alec Moses

(57) **Abstract**

An apparatus 10 including a generally elliptical reflector 12, a light generating source 14, and several optical fibre cables or bundles 16, 18 which respectively include optical fibres 36, 38 which operatively and selectively receive and/or collect light rays 20 generated by source 14 and which operatively and selectively transfer the received light rays 20 to one or more remote locations. The optical fibres 36, 38 have ends or apertures 48, 50 and/or are arranged in a manner which allows the fibres 36, 38 to co-operatively receive substantially all of the light emanating from source 14.

## Description

This invention generally relates to a method and to an apparatus for collecting light and, more particularly, to a method and to an apparatus for collecting light which is adapted for use in remote lighting systems and which increases the amount of light which may be operatively collected and operatively used in and/or by these remote lighting systems.

Remote lighting systems are typically used to generate and communicatively "collect" and "guide" light to one or more locations remote from the generator or source. These systems are typically used in a wide variety of applications, such as within vehicles, and include a light generating source, a generally elliptical "collector" or reflector, and one or more bundles of optical guides or fibres. For example and without limitation, in automobiles, fibre optic bundles are used to selectively receive light which is generated by a source within the vehicle and to selectively and operatively transfer the received light to other portions of the vehicle, such as to the vehicle's head lights, to the interior of the vehicle, and/or to the vehicle's instrument panel.

A bundle typically includes a light receiving end portion which is co-operatively formed by the openings or the "numerical apertures" of each of the optical fibres contained within the bundle. The openings or apertures allow light to be received and communicated within the respective bundle-forming fibres. The light receiving end portion is further typically disposed in relative close proximity to the light collector and, more particularly, to the "focal point of the light collector, to which the collector receivably reflects the light which is generated by the source. The optical fibres receive and collect the generated and/or reflected light through and/or by use of their respective numerical apertures and transfer the received and collected light to remote locations which are desired to be illuminated through the known technique or principle of "total internal reflection".

Particularly, when a light wave from the source is "incident on" and/or impinges upon the end or "numerical aperture" of a fibre at an angle which is equal to or less than the critical angle of that fibre, the light is substantially, totally, and internally reflected within the fibre, thereby being guided or communicatively transferred to remote locations with substantially little or no loss of energy or light intensity.

While prior remote lighting systems provide advantages over non-remote type systems (e.g., they require less power consumption, provide greater light intensity, and are less susceptible to damage), they suffer from some drawbacks.

Particularly, the light receiving and/or collecting end or "aperture containing" portion of each of the bundles are typically oriented at a substantially similar angle and in a substantially similar direction (e.g., the "numerical apertures" or receiving ends of each of the fibres/guides all substantially lie within the same plane). Therefore, the range of "allowable" angles in which light impinging on the light-receiving end of a bundle is desirably collected, totally and internally reflected, and communicated by the bundle is relatively narrow.

A substantial amount of the light which is generated by the source impinges upon the light receiving end of a bundle at angles which are greater than the respective critical angles of the contained fibres. Hence, much of the light which is incident on the end of a bundle is not receivably transmitted and/or communicated by the contained fibres, but is rather "lost", or dissipated as heat, thereby undesirably decreasing the efficiency of the remote lighting system (e.g., energy is lost as the light is communicated from the source to a bundle).

There is therefore a need for a method and an apparatus for collecting light which overcomes the various previously delineated drawbacks of these prior light collection arrangements; which may be used within and/or which may comprise and/or form a remote lighting system; which substantially increases the efficiency of and/or forms a highly efficient remote lighting system; and which substantially increases the amount of light that is collected from the source.

According to a first aspect of the present invention, an apparatus for receivably collecting light which is used in combination with a source which generates a certain amount of light is provided. The apparatus includes a first optical fibre having a first light receiving end which is substantially contained within a first plane and a second optical fibre having a second light receiving end which is substantially contained within a second plane, the first and the second light receiving ends co-operatively allowing substantially all of the certain amount of light to be received by the first and the second fibre.

According to another aspect of the present invention, a method for collecting light generated from a source is provided. Particularly, the method includes the steps of: providing a reflector having a first focal point and a second focal point, the reflector being adapted to reflect light to the second focal point; disposing the source in relative close proximity to the first focal point, effective to cause the reflector to reflect a certain amount of the light generated by the source to a location to the second focal point; providing several optical fibres, each of the optical fibres including a light collection end; flaring the ends of the optical fibres; and disposing the flared ends of the optical fibres in relative close proximity to the second focal point, thereby causing the ends of the optical fibres to co-operatively collect substantially all of the light which is generated by the source.

It is an advantage of a method and an apparatus for receivably collecting light embodying the present invention that it overcomes some or all of the previously delineated disadvantages of prior light collecting systems and assemblies.

It is another advantage of a method and an apparatus for receivably collecting light embodying the present invention that it may be used within a remote lighting system to substantially increase the efficiency of the system, and/or which may form and/or comprise a highly efficient remote lighting system.

It is a further advantage of a method and apparatus for receivably collecting light embodying the present invention that it substantially increases the amount of light that is collected from a light generating source.

The present invention will now be described further, by way of example, with reference to the accompanying drawings, in which:
Figure 1 is a perspective view of an apparatus for collecting light which is made in accordance with the teachings of a preferred embodiment of the invention;
Figure 2 is a perspective and partial view of two optical fibre bundles which are used within the apparatus shown in Figure 1;
Figure 3 is a perspective and partial view of an optical fibre bundle made in accordance with the teachings of the prior art;
Figure 4 is a side view of the optical fibre bundle shown in Figure 3 being used in combination with a conventional light generating source and a conventional reflector;
Figure 5 is a side elevation view of an apparatus for collecting light made in accordance with the teachings of a second embodiment of the invention with a portion removed to illustrate the interior of the device;
Figure 6 is a side cut-away view of an apparatus for collecting light made in accordance with the teachings of a third embodiment of the invention; and
Figure 7 is a view of the apparatus for collecting light shown in Figure 6 and taken along view line 7-7.

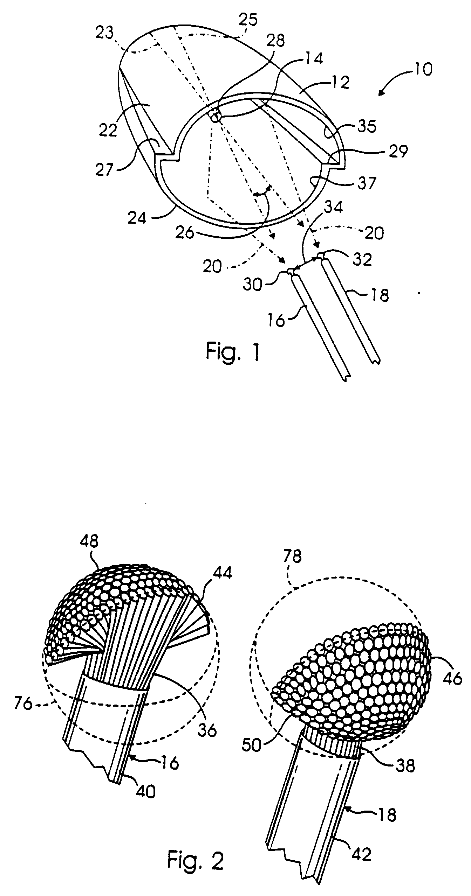

Referring now to Figure 1 - 2, there is shown a light collecting apparatus 10 which is made in accordance with the teachings of the preferred embodiment of the invention. As shown, apparatus 10 includes a light "collector" or reflector 12, a light generating source 14, and two (or more) optical fibre cables or bundles 16, 18 which operatively and selectively receive and/or "collect" light waves or rays 20 which are generated by the source 14. Bundles 16, 18 co-operatively communicate and/or transfer the received or "collected" light rays 20 to one or more locations and/or assemblies, such as assemblies and/or locations within a vehicle (e.g., headlights and/or the vehicle passenger compartment).

Reflector 12, in one non-limiting embodiment, is generally ellipsoidal and includes a top "half" or portion 22 having a generally elliptical cross sectional area and a longitudinal axis of symmetry 23, and a second bottom "half" or portion 24 having a generally elliptical cross sectional area and a longitudinal axis of symmetry 25. Axes 23, 25 are "offset" and are not aligned (e.g., axis 23 does not overlay axis 25) in the preferred embodiment of the invention. Further, portions 22 and 24 integrally co-operate to form the reflector 12 by integrally terminating within and/or co-operatively forming ledges 27, 29. Portions 22, 24 each respectively have a relatively highly reflective interior surface 35, 37.

It should be appreciated that portions 22, 24, in the preferred embodiment of the invention, are respectively and substantially identical to the top and bottom "halves" or portions of a conventional and commercially available ellipsoidal reflector, with the exception that portions 22, 24 may be thought of as having been "rotated" or "angularly displaced" with respect to each other by a predetermined angle 26 (e.g., in conventional and commercially available reflectors the axes 23, 25 are aligned).

Particularly, the previously delineated "offset" of portions 22, 24 allows each portion 22, 24 to share a single and first focal point 28 and to have respective second focal points 30, 32 which are separated by a predetermined distance. In the preferred embodiment of the invention, the second respective focal points 30, 32 of portions 22, 24 are located "outside" of the reflector 12 and are separated by a distance 34. It should be appreciated by one of ordinary skill in the art that, in this manner, substantially any light rays 20 originating from or passing through focal 28 which reflect off of the interior surface 35 of the "top" half or portion 22 of reflector 12 will "pass through" or impinge upon focal point 32, and substantially any light rays 20 originating from or passing through focal point 28 which reflect off of the interior surface 37 of the "bottom" half or portion 24 of reflector 12 will "pass through" or impinge upon focal point 30.

In the preferred embodiment of the invention, source 14 is a conventional light generating source such as a filament type source or an arc type source. In other alternate embodiments, source 14 may comprise any type of light generating source such as any suitable chemical, electrical or nuclear light generating source. Source 14, in one non-limiting embodiment, is disposed at or in relative close proximity to focal point 28. Thus, substantially any light rays 20 which are generated by source 14 and which reflect off of the interior surface 35 of top portion 22 of reflector 12 will pass or travel through or in relative close proximity to focal point 32, and substantially any light rays 20 generated by source 14 which "reflect off of" the interior surface 37 of the bottom portion 24 of reflector 12 will pass or travel through or in relative close proximity to focal point 34.

Optical fibre bundles 16, 18 each include a plurality of substantially identical optical fibres 36, 38 which are respectively and collectively wrapped or packaged in a relatively flexible and durable protective cover 40, 42. Bundles 16, 18 are respectively and conventionally mounted such that their respective light receiving ends 44, 46 are respectively located in relative close proximity to focal points 30, 32. At each light receiving end 44, 46, the respective ends or numerical apertures 48, 50 of the respectively contained fibres 36, 38 are exposed to the generated light, thereby allowing fibres 36, 38 to receive light generated by source 14. As discussed more fully and completely below, each bundle 16, 18 is similar to a conventional or prior optical fibre bundle or cable with the exception that their respective light receiving ends 40, 42 form a new and desired flared shape which allows and/is formed by a new and desired spatial orientation of the respectively contained fibres.

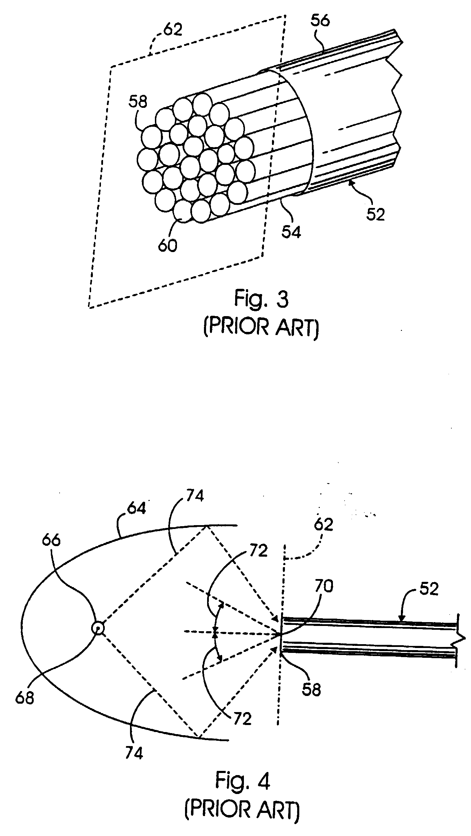

Particularly, conventional optical fibre bundles or cables, such as bundle 52 shown in Figure 3, include several optical fibres 54 which are collectively wrapped or packaged in a relatively flexible and durable protective cover 56. Bundle 52 includes a light receiving end 58 which is co-operatively formed by each open end or numerical aperture 60 of each of the contained fibres 54. End 58 and apertures 60 are exposed to the generated light, thereby allowing fibres 54 to receive and collect light rays and to communicatively transfer the received and collected light rays through bundle 52 by use of the technique or the principle of total internal reflection. Further, as shown in Figure 3, the ends or numerical apertures 60 of fibres 54 are all substantially aligned, orientated, and operatively and wholly contained within a single plane 62. While prior bundles, such as bundle 52, adequately receive and transmit some of the light which is generated from the source, they suffered from some drawbacks due to this "unidirectional" (e.g., single plane) orientation or arrangement. These drawbacks may be understood by reference to Figure 4 which illustrates the use of this conventional arrangement, used in combination with a conventional reflector 64 and a conventional light generating source 66.

In the prior arrangements, the source 66 is mounted and/or positioned in relative close proximity to a first focal point 68 of the reflector 64, and the light receiving end 58 of bundle 52 is mounted and/or positioned in relative close proximity to a second focal point 70 of reflector 64. Since all of the ends or apertures 60 of the fibres 54 lie and/or are operatively contained in substantially the same single plane 62, bundle 52 has substantially only one relatively narrow range of angles (i.e., angles being less than or equal to angle 72) at which light incident on end 58 will be totally internally reflected within the fibres 54. Therefore, any light rays, such as light rays 74 which are incident upon light receiving end 58 at an angle greater than angle 72 are not totally internally reflected and transmitted by bundle 52. Rather, the energy associated with these light rays, such as ray 74, is lost or dissipated as heat. Thus, a significant amount of the light or light rays which are generated by source 66 are not received and collected by light receiving end 58 and/or transmitted by bundle 52, thereby reducing the overall efficiency of the prior assembly (e.g., energy is lost during the communication of light from source 66 to bundle 52).

In contrast to the substantially flat or planar receiving end 58 of prior bundles, such as bundle 52, receiving ends 44 and 46 are "flared" and co-operatively arranged or "mated" to be substantially "bulbous," rounded, or "semi-spherical" in shape. That is, unlike prior bundles 52 having each fibre end or numerical aperture 60 being oriented or operatively contained within substantially the same plane (e.g., plane 62), the ends or apertures 48, 50 of fibres 36, 38 are each formed and/or arranged such that they are oriented in and/or along different directions or reside in substantially different planes (e.g., an axis passing through the middle point of a first of the apertures 48, 50 is not parallel to an axis which passes through the middle point of a second of the apertures 48, 50).

In the preferred embodiment of the invention, as best shown in Figure 2, the ends or apertures 48, 50 of fibres 36, 38 are substantially, collectively and co-operatively oriented or arranged in a semi-spherical pattern and/or a generally bulbous and/or flared formation. Particularly, the "flared" ends or apertures 48 of end 44 are substantially and collectively arranged or aligned in a semi-spherical pattern which substantially corresponds to a bottom quarter or quadrant of a sphere 76; and the ends or apertures 50 of end 46 are substantially arranged or aligned in a semi-spherical pattern which substantially corresponds to a top quarter or quadrant of a sphere 78. It should be realised that other configurations and/or shapes may be utilised other than the shape that is shown within Figure 2. Particularly, any desired shape may be chosen as long as the apertures 48, 50 respectively and co-operatively form a rounded or arcuate shape, and/or are operatively contained within different planes, in a manner which allows these apertures 48, 50 to co-operatively receive substantially all of the generated light at their respective critical angles (e.g., substantially all of the generated light is co-operatively received and totally and internally reflected within and communicated by each of the fibres without substantial loss).

In operation, each of the light rays 20 reflecting off of the top surface 35 of reflector 12 will be incident upon a fibre 38 of end 46 at an angle equal to or less that the critical angle the fibre 38. Each of the light rays 20 reflecting off of the bottom surface 37 of reflector 12 will be incident upon a fibre 36 of end 44 at an angle equal to or less than the critical angle of that fibre 36. Since the fibres 36, 38 are "flared" and/or oriented along the various directions of travel of rays 20, the fibre bundles 16, 18 will receive and conduct substantially all of the light rays 20 which are generated by source 14. In this manner, none or substantially very little of the light generated by source 14 is lost or dissipated as heat. Thus, apparatus 10 collects substantially more light than prior assemblies having fibre ends or apertures oriented in substantially the same direction or plane, and is more efficient than these prior assemblies.

In other embodiments, reflector 12 is replaced with a conventional elliptical reflector having only two focal points. In such embodiments a single optical fibre cable or bundle is used and the light receiving ends of the bundle are oriented in a semi-spherical pattern or formation which substantially corresponds to substantially one "half" of a sphere (e.g., a hemisphere).

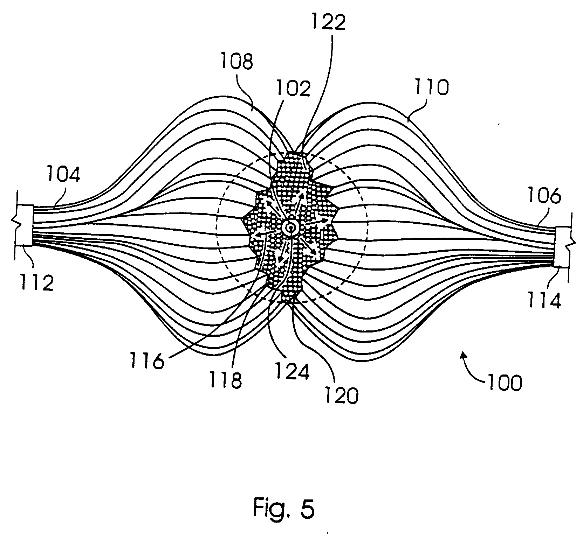

Referring now to Figure 5, there is shown an apparatus 100 for collecting light, which is made in accordance with the teachings of a second embodiment of the invention. Apparatus 100 includes a light generating source 102 and two substantially identical optical fibre bundles 104, 106. Source 102 preferably comprises a conventional omnidirectional light generating source (i.e., source 102 generates light waves or rays 116 in substantially every direction emanating from source 102), such as a conventional electrical light generating source (e.g., a source comprising a filament or an arc type element). In other alternate embodiments, source 102 may comprise any type of light generating source such as a chemical-type or nuclear-type light source. Optical fibre bundles 104, 106 each include a plurality of substantially identical optical fibres 108, 110 which are respectively and collectively wrapped or packaged in a relatively flexible and durable protective cover 112, 114.

The light collecting ends or apertures 118, 120 of fibres 108, 110 are orientated or arranged to co-operatively form a generally spherical cavity 122 which is symmetrical about a centre point or centre of symmetry 124. In other alternate embodiments, cavity 122 may be of other suitable shapes and may form an elliptical-shaped or polyhedron-shaped cavity. Source 102 is disposed at or in relative proximity to the centre of symmetry 124 of cavity 122. In this manner, source 102 is substantially entirely enclosed or surrounded by ends or apertures 118, 120.

In operation, the light rays 116 generated by source 102 are substantially and "perpendicularly" incident upon each of the ends or apertures 118, 120 which co-operatively form spherical cavity 122 (e.g., each generated light ray is received by one of the apertures 118 along a direction which is perpendicular to the plane wholly containing the apertures 118, 120). Since ends or apertures 118, 120 are collectively and spatially oriented around light source 102 and are each substantially contained within a differential plane, nearly all of the light rays 116 which are incident upon the ends or apertures 118, 120 are incident within the critical angles of each respective end or aperture 118, 120. Hence, substantially all of the light rays 116, generated by source 102, are received and totally internally reflected within fibres 108, 110 and are transmitted by bundles 104, 106 to various remote locations and/or remotely located assemblies. In this manner, substantially all of the light generated by source 102 is collected by apparatus 100.

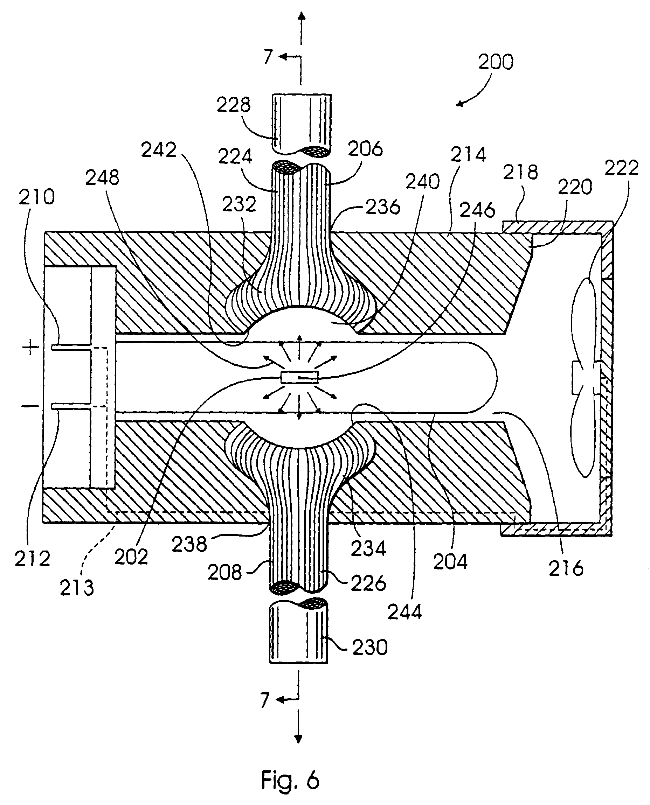

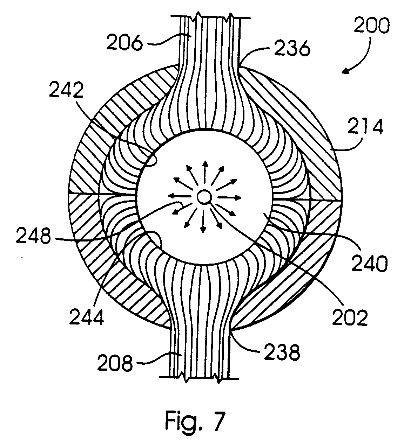

Referring now to Figures 6 and 7, there is shown a light collecting apparatus 200 which is made in accordance with the teachings of a third embodiment of the present invention. Apparatus 200 includes a light generating source 202 which is operatively disposed within a generally cylindrical and generally hollow tube or capsule 204, two fibre optic bundles 206, 208, and a positively and a negatively charged electric terminal 210, 212. Source 202 and capsule 204 are securely contained within a generally cylindrical housing 214 and more particularly, within a centrally disposed and substantially cylindrical channel 216 which is integrally formed within housing 214. Source 202 is disposed in relative close proximity to the centre of symmetry 246 of a generally spherical opening or cavity 240 formed within housing 214 and is disposed in the centre of symmetry of the capsule or tube 204. Source 202 is preferably a conventional electrical light generating source, such as a filament type or arc type light generating source. Terminals 210, 212 are also operatively and securely contained within housing 214.

Optical fibre bundles 206, 208 each include a plurality of substantially identical conventional optical fibres 224, 226 which are respectively and collectively wrapped or packaged in a relatively flexible and durable protective cover 228, 230. Bundles 206, 208 are removably, frictionally, and respectively secured within slots 236, 238. Particularly, the light receiving ends 232, 234 of bundles 206, 208 each respectively extend through the aperture or slot 236, 238 and co-operatively form a substantially spherical pattern or shape around the substantially spherical opening or cavity 240 within channel 216. Particularly, the ends or apertures 242, 244 of each of fibres 224, 226 are substantially and respectively contained within a different plane and are collectively formed and/or arranged in a substantially spherical pattern around cavity 240 and source 202, thereby substantially encapsulating cavity 240 and source 202. In other alternate embodiments, ends or apertures 242, 244 may be arranged to collectively form other suitable shapes or patterns such as an elliptical shape or polyhedron.

A cap 218 is operatively, conventionally, and removably coupled to end 220 of housing 214. Cap 218 includes an electrically operated fan 222 which is electrically and communicatively coupled to terminals 210, 212 by bus 213 and selectively and operatively propels air into cavity 216 thereby cooling the ends 242, 244 of optical fibres 224, 226, capsule 204, and housing 214 during operation.

In operation, terminals 210, 212 are operatively and selectively connected to a conventional source of electrical power (not shown) and communicate electric power to source 202, thereby causing source 202 to generate light or light rays 248. The generated light rays 248 are substantially and perpendicularly incident on each of the ends or apertures 242, 244 which are co-operatively disposed around spherical cavity 240 (e.g., each generated light ray is received by one of the apertures 242, 244 along a direction which is perpendicular to the plane wholly containing that aperture 242, 244). Since ends or apertures 242, 244 are collectively oriented in a substantially spherical pattern surrounding light source 202, nearly all of the light rays 248 generated by source 202 are incident upon respective ends 242, 244 (and fibres 224, 226) at angles which are respectively less than or equal to the critical angle of each respective end 242, 244 (and each respective fibre 224, 226). Hence, substantially all of the light rays 248, generated by source 202, are received and totally internally reflected within fibres 224, 226, and are desirably transmitted by bundles 206, 208 to a remotely located assembly (not shown). In this manner, substantially all of the light generated by source 202 is collected by apparatus 200.

## Claims

1. A light collection apparatus of the type for use in combination with a light source (14) which generates light, said apparatus comprising: a first fibre (16,36) having a first end (48) operatively and wholly contained within a first plane; and a second fibre (18,38) having a second end (50) operatively and wholly contained within a second plane, said first and said second ends (48,50) co-operatively allowing a first portion of said light to be communicated to said first fibre (16,36) and the remaining portion of said light to be communicated to said second fibre (18,38).

2. An apparatus as claimed in claim 1, wherein said first and said second ends each comprise an aperture.

3. An apparatus as claimed in claim 1 further comprising a reflector which reflects a portion of said generated light from said source to said first and second ends.

4. An apparatus as claimed in claim 3, wherein said reflector is generally ellipsoidal.

5. An apparatus as claimed in claim 1, wherein said first fibre and said second fibre are contained within a bundle.

6. An apparatus as claimed in claim 3, wherein said reflector comprises a first portion having a first axis of symmetry and a second portion having a second axis of symmetry which is angularly displaced from said first axis of symmetry.

7. An apparatus as claimed in claim 1 further comprising a plurality of optical fibres which co-operate with said first and second fibres to substantially encapsulate said light source.

8. An apparatus as claimed in claim 7, wherein said plurality of optical fibres are arranged in a substantially spherical pattern.

9. An apparatus for collecting light comprising:
a source which selectively generates a certain amount of light; and
a plurality of optical fibres having respectively flared ends which co-operatively allow substantially all of said certain amount of light to be received by and to be internally reflected within said plurality of optical fibres.

10. A method for collecting light generated by a light source, said method comprising the steps of:
providing a reflector having a first focal point and a second focal point, said reflector being adapted to reflect light which is received at said first focal point to said second focal point;
disposing said source in relative close proximity to said first focal point, effective to cause said reflector to reflect said light generated by said source to a location in relative proximity to said second focal point;
providing a plurality of optical fibres, each of said optical fibres including an end for collecting light;
causing said ends of said optical fibres to be operatively flared; and
disposing said operatively flared ends of said optical fibres in relative close proximity to said second focal point, thereby causing said ends of said optical fibres to co-operatively collect substantially all of said light generated by said source.
